# EUROPEAN PATENT APPLICATION

(11) **EP 4 628 353 A1**
(43) Date of publication of application: **08.10.2025**
(21) Application number: 23912663.4
(22) Date of filing: 11.12.2023
(51) Int. Cl.: B60L 53/80, B60L 53/54, B60L 53/12, B60L 53/14, B60L 53/62, G06F 8/65

(54) **BSS MANAGEMENT DEVICE AND OPERATING METHOD THEREFOR**

(30) Priority: 30.12.2022 KR 20220190693
(71) Applicant: LG Energy Solution, Ltd., Seoul 07335 (KR)
(72) Inventor: LEE, Hyun Hwa, Daejeon 34122 (KR); CHOI, Jin Hyouk, Daejeon 34122 (KR); LEE, Jin Woo, Daejeon 34122 (KR); KIM, Dong Hyun, Daejeon 34122 (KR); LEE, Ju Ra, Daejeon 34122 (KR); KIM, Eung Jun, Daejeon 34122 (KR)
(74) Representative: Plasseraud IP
(86) International application number: PCT/KR2023/020291
(87) International publication number: WO 2024/143988

(57) **Abstract**

A battery swapping station (BSS) management device according to one embodiment disclosed in the present document includes an acquisition unit configured to acquire firmware update data, and a management unit configured to remotely manage a BSS and a swappable battery inserted into a slot of the BSS, wherein the management unit updates firmware of the BSS and firmware of the swappable battery based on the firmware update data.

## Description

### [TECHNICAL FIELD]

### CROSS-REFERENCE TO RELATED APPLICATION

This application claims priority to and the benefit of Korean Patent Application No. 10-2022-0190693 filed in the Korean Intellectual Property Office on December 30, 2022, the entire contents of which are incorporated herein by reference.

### TECHNICAL FIELD

Embodiments disclosed in the present document relate to a battery swapping station (BSS) management device and a method of operating the same.

### [BACKGROUND ART]

A battery swapping station is designed to accommodate and manage a plurality of swapping batteries and allow the plurality of swapping batteries to be easily used by users of electrically driven vehicles such as electric cars, electric scooters, and electric bicycles. For example, the battery swapping station may charge a swappable battery using power from an external power supply and provide the fully charged swappable battery to the users of the electric vehicles.

A user may separate the fully charged swappable battery from the battery swapping station and use the battery by mounting the battery in an electrically driven vehicle. In addition, the user may separate an exhausted swappable battery from the electrically driven vehicle and charge the battery by mounting the battery in a battery swapping station.

### [DISCLOSURE]

### [TECHNICAL PROBLEM]

Conventionally, when a problem occurs in a battery swapping station (BSS) or a swappable battery, a worker has directly visited managed the site to manage a power source, a charging voltage, a charging current, and the like of the BSS or swappable battery or mount an USB in the actual swappable battery to update firmware.

This method has been an inefficient response method that has lowered a worker's work efficiency and has made it impossible to respond quickly.

Embodiments disclosed in the present document can provide a BSS management device capable of remotely managing a BSS and a swappable battery inserted into a slot of the BSS at the same time, and a method of operating the same.

The embodiments disclosed in the present document can provide a BSS management device capable of updating firmware of a BSS to a specified version and update firmware of a swappable battery to a version compatible with an updated function from the specified version.

The objects of embodiments disclosed in the present document are not limited to the above-described objects, and other objects that are not mentioned will be able to be clearly understood by those skilled in the art from the following descriptions.

### [TECHNICAL SOLUTION]

A battery swapping station (BSS) management device according to one embodiment disclosed in the present document includes an acquisition unit configured to acquire firmware update data, and a management unit configured to remotely manage a BSS and a swappable battery inserted into a slot of the BSS, wherein the management unit updates firmware of the BSS and firmware of the swappable battery based on the firmware update data.

In the BSS management device according to one embodiment disclosed in the present document, the management unit may manage the BSS and the swappable battery by wire or wirelessly depending on a communication environment.

In the BSS management device according to one embodiment disclosed in the present document, the management unit may be configured to update the firmware of the BSS to a first version, and update the firmware of the swappable battery to a second version compatible with functions updated from the first version, and the firmware update data may include first update data that updates the firmware of the BSS to the first version, and second update data that updates the firmware of the swappable battery to the second version.

In the BSS management device according to one embodiment disclosed in the present document, the acquisition unit may acquire state data of the BSS, and the management unit may control at least one of power, a charging voltage, or a charging current of the BSS based on the state data.

In the BSS management device according to one embodiment disclosed in the present document, the acquisition unit may acquire state data of the swappable battery, and the management unit may control at least one of a charging voltage, or charging current of the BSS based on the state data.

The BSS management device according to one embodiment disclosed in the present document may further include an authentication unit configured to perform authentication for the BSS and/or the swappable battery, wherein the management unit may remotely manage the BSS and the swappable battery based on the authentication.

In the BSS management device according to one embodiment disclosed in the present document, the authentication unit may perform first authentication for the BSS and authentication for the swappable battery, and the management unit may update the firmware of the BSS and the firmware of the swappable battery when both the first authentication and the second authentication are successful.

In the BSS management device according to one embodiment disclosed in the present document, the authentication unit may be configured to perform a first authentication for the BSS, and perform a second authentication for the swappable battery when the first authentication is successful, and the management unit may be configured to update the firmware of the BSS when the first authentication is successful, and update the firmware of the swappable battery when the second authentication is successful.

A battery swapping station (BSS) management method according to one embodiment disclosed in the present document includes an operation of acquiring firmware update data, and an operation of remotely managing a battery swapping station (BSS) and a swappable battery inserted into a slot of the BSS, wherein the operation of remotely managing the BSS and the swappable battery includes an operation of updating firmware of the BSS and firmware of the swappable battery based on the firmware update data.

In the BSS management method according to one embodiment disclosed in the present document, the operation of updating the firmware of the BSS and the firmware of the swappable battery may include an operation of updating the firmware of the BSS to a first version, and an operation of updating the firmware of the swappable battery to a second version compatible with functions updated from the first version, and the firmware update data may include first update data that updates the firmware of the BSS to the first version, and second update data that updates the firmware of the swappable battery to the second version.

The BSS management method according to one embodiment disclosed in the present document may further include an operation of acquiring state data of the BSS, wherein the operation of remotely managing the BSS may include an operation of controlling at least one of power, a charging voltage, or a charging current of the BSS based on the state data.

The BSS management method according to one embodiment disclosed in the present document may further include an operation of acquiring state data of the swappable battery, wherein the operation of remotely managing the BSS may include an operation of controlling at least one of a charging voltage, or a charging current of the BSS based on the state data.

The BSS management method according to one embodiment disclosed in the present document may further include an operation of performing authentication for the BSS and/or the swappable battery, wherein the operation of remotely managing the BSS and the swappable battery may include an operation of remotely managing the BSS and the swappable battery based on the authentication.

In the BSS management method according to one embodiment disclosed in the present document, the operation of performing the authentication may include an operation of performing a first authentication for the BSS and a second authentication for the swappable battery, and the operation of updating the firmware of the BSS and the firmware of the swappable battery may include an operation of updating the firmware of the BSS and the firmware of the swappable battery when both the first authentication and the second authentication are successful.

In the BSS management method according to one embodiment disclosed in the present document, the operation of performing the authentication may include an operation of performing a first authentication for the BSS, and an operation of performing a second authentication for the swappable battery when the first authentication is successful, and the operation of updating the firmware of the BSS and the firmware of the swappable battery may include an operation of updating the firmware of the BSS when the first authentication is successful, and an operation of updating the firmware of the swappable battery when the second authentication is successful.

### [ADVANTAGEOUS EFFECTS]

According to the BSS management device and the method of operating the same according to various embodiments disclosed in the present document, by remotely managing the BSS and the swappable battery inserted into the slot of the BSS, it is possible to not only improve the worker's work efficiency, but also quickly response to problems that arise.

The effects of the swappable battery and the method of operating the same according to the disclosure of the present document are not limited to the above-described effect, and other effects that are not mentioned will be able to be clearly understood by those skilled in the art according to the disclosure of the present document.

In addition, various effects that may be directly or indirectly identified through the present document can be provided.

### [DESCRIPTION OF DRAWINGS]

FIG. 1 is a view illustrating a battery swapping system according to one embodiment.
FIG. 2 is a block diagram of a battery swapping station (BSS) management device according to one embodiment.
FIG. 3 is an operation flowchart of the BSS management device according to one embodiment.
FIG. 4 is an operation flowchart of the BSS management device according to one embodiment.
FIG. 5 is an operation flowchart of the BSS management device according to one embodiment.
FIG. 6 is an operation flowchart of the BSS management device according to one embodiment.

### [MODE FOR INVENTION]

Hereinafter, various embodiments of the present invention will be described with reference to the accompanying drawings. However, it should be understood that this is not intended to limit the present invention to specific embodiments and includes various modifications, equivalents, and/or alternatives of the embodiments of the present invention.

It should be understood that various embodiments of the present document and the terms used therein are not intended to limit the technical features described in the present document to specific embodiments and include various modifications, equivalents, or substitutes of the corresponding embodiments. In the description of the drawings, similar reference numerals may be used for similar or related components. The singular form of a noun corresponding to an item may include one item or a plurality of items unless the relevant context clearly dictates otherwise.

In the present document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. The terms such as "first," "second," "first," "second," "A," "B," "(a)," or "(b)" may simply be used to distinguish the corresponding component from another and do not limit the corresponding components in another aspect (e.g., importance or order).

In the present document, when a certain (e.g., a first) component is described as being "connected," "coupled," or "joined or "coupled" or "connected" to another (e.g., a second) component with or without the terms "functionally" or "communicatively," this means that the certain component may be connected to another component directly (e.g., by wire), wirelessly, or through a third component.

According to one embodiment, the method according to various embodiments disclosed herein may be provided to be included in a computer program product. The computer program product may be traded between sellers and buyers as commodities. The computer program product may be distributed in the form of a device-readable storage medium (e.g., a compact disc read only memory (CD-ROM)) or distributed (e.g., downloaded or uploaded) through an application store or directly online between two user devices. In the case of the online distribution, at least some of the computer program products may be at least temporarily stored or temporarily generated in a device-readable storage medium such as a memory of a server of a manufacturer, a server of an application store, or a relay server.

According to various embodiments, each component (e.g., a module or a program) of the above-described components may include a single object or a plurality of objects, and some of the plurality of objects may be separately disposed in another component. According to various embodiments, one or more components or operations among the above-described corresponding components may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to various embodiments, operations performed by modules, programs, or other components may be executed sequentially, in parallel, repeatedly, or heuristically, or one or more of the operations may be executed in a different order or omitted, or one or more other operations may be added.

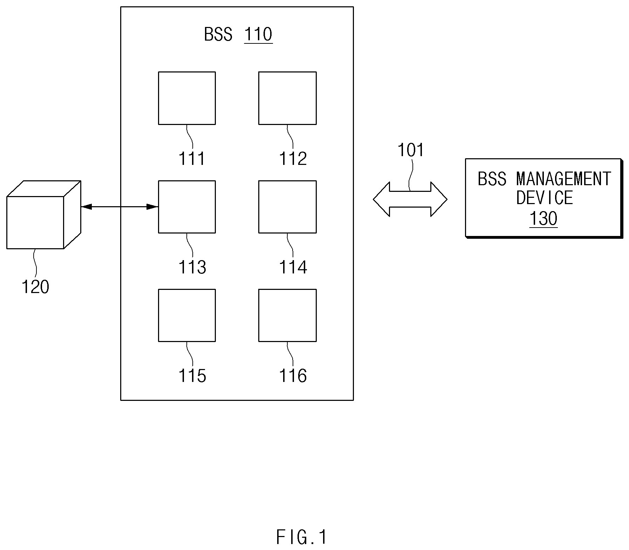

FIG. 1 is a view illustrating a battery swapping system according to one embodiment.

Referring to FIG. 1, the battery swapping system may include a battery swapping station (BSS) 110, a swappable battery 120, and a BSS management device 130.

The BSS 110 may be provided at each designated charging station. According to one embodiment, the BSS 110 may include a plurality of slots 111, 112, 113, 114, 115, and 116 that may be accommodated for charging the swappable battery 120. When the swappable battery 120 is accommodated in the plurality of slots 111, 112, 113, 114, 115, and 116, the BSS 110 may supply power to the accommodated swappable battery 120.

According to one embodiment, the BSS 110 may receive the swappable battery 120 used by the user of an electrically driven vehicle (e.g., an electric vehicle, an electric scooter, or an electric bicycle) and when a charging fee is paid by the user, provide the user with one of other swapping batteries having already been charged. For example, when the user returns the used swappable battery 120 to the slot 113 of the BSS 110, the swappable battery 120 may be mounted in the slot 113. Then, when the user pays the charging fee, another swappable battery disposed in one of the remaining slots 111, 112, 114, 115, and 116 may be separated from the corresponding slot and provided to the user.

The swappable battery 120 may be a battery pack that may be used by being mounted in an electrically driven vehicle. The swappable battery 120 may be separated from the electrically driven vehicle and accommodated in one of the plurality of slots 111, 112, 113, 114, 115, and 116 of the BSS 110. The swappable battery 120 accommodated in one of the plurality of slots 111, 112, 113, 114, 115, and 116 may receive power from the BSS 110.

According to one embodiment, the BSS 110 may be connected to the BSS management device 130 by wire and/or wirelessly.

According to one embodiment, a connection 101 between the BSS 110 and the BSS management device 130 may be a communication connection via a wired and/or wireless network. According to one embodiment, the wired network may be based on local area network (LAN) communication or powerline communication. According to one embodiment, the wireless network may be based on a short-range communication network (e.g., Bluetooth, wireless fidelity (WiFi), or infrared data association (IrDA)) or a telecommunication network (a cellular network, a fourth-generation (4G) network, or a fifth-generation (5G) network).

According to one embodiment, the BSS 110 may acquire a signal related to at least one of firmware update, power control, charging voltage control, or charging current control from the BSS management device 130 through the connection 101 with the BSS management device 130.

According to one embodiment, the BSS 110 may acquire a firmware update signal of the BSS 110 and/or a firmware update of the swappable battery 120 inserted into the slot 113 of the BSS 110 from the BSS management device 130. For example, the BSS 110 may acquire a first update signal for allowing the firmware of the BSS 110 to be updated to a first version and/or a second update signal for allowing the firmware of the swappable battery 120 to be updated to a second version. Here, the second version may be a version compatible with functions updated from the first version.

According to one embodiment, when the first update signal is acquired, the firmware of the BSS 110 may be updated to the first version. In addition, when the second update signal is acquired, the BSS 110 may update the firmware of the swappable battery 120 to the second version. According to another embodiment, the BSS 110 may transmit the acquired second update signal to the swappable battery 120 by wire or wirelessly. When the swappable battery 120 acquires the second update signal, the firmware of the swappable battery 120 may be updated to the second version.

According to one embodiment, the swappable battery 110 may directly acquire the second update signal through a wired or wireless connection with the BSS management device 130.

According to one embodiment, the BSS 110 may acquire a control signal related to at least one of power control, charging voltage control, or charging current control from the BSS management device 130. For example, the BSS 110 may acquire a power control signal for allowing power to be turned off from the BSS management device 130. In this case, the BSS 110 may turn off the power according to the acquired power control signal. As another example, a charging voltage control signal for controlling a charging voltage for the swappable battery 120 inserted into the slot 113 to a specified voltage may be acquired from the BSS management device 130. In this case, the BSS 110 may control the charging voltage for the swappable battery 120 to the specified voltage according to the acquired charging voltage control signal.

According to one embodiment, the BSS management device 130 may perform authentication for the BSS 110 and the swappable battery 120 through the connection 101.

According to one embodiment, the BSS management device 130 may send a first authentication request signal for the BSS 110 and a second authentication request signal for the swappable battery 120 to the BSS 110 through the connection 101. The BSS 110 may send the first authentication signal to the BSS management device 130 through the connection 101 in response to the first authentication request signal. When receiving the first authentication signal, the BSS management device 130 may determine that the authentication for the BSS 110 is successful. The BSS 110 may transmit the second authentication request signal to the swappable battery 120 by wire or wirelessly. The swappable battery 120 may transmit the second authentication signal to the BSS 110 by wire or wirelessly in response to the second authentication request signal, and the BSS 110 may send the second authentication signal to the BSS management device 130 through the connection 101. When receiving the second authentication signal, the BSS management device 130 may determine that the authentication for the swappable battery 120 is successful.

According to one embodiment, the BSS management device 130 may directly perform the authentication for the swappable battery 120 through a wired or wireless connection with the swappable battery 120.

According to one embodiment, the BSS management device 130 may send the second authentication request signal for the swappable battery 120 to the swappable battery 120 through the wired or wireless connection with the swappable battery 120. The swappable battery 120 may send the second authentication signal to the BSS management device 130 in response to the second authentication request signal. When receiving the second authentication signal, the BSS management device 130 may determine that the authentication for the swappable battery 120 is successful.

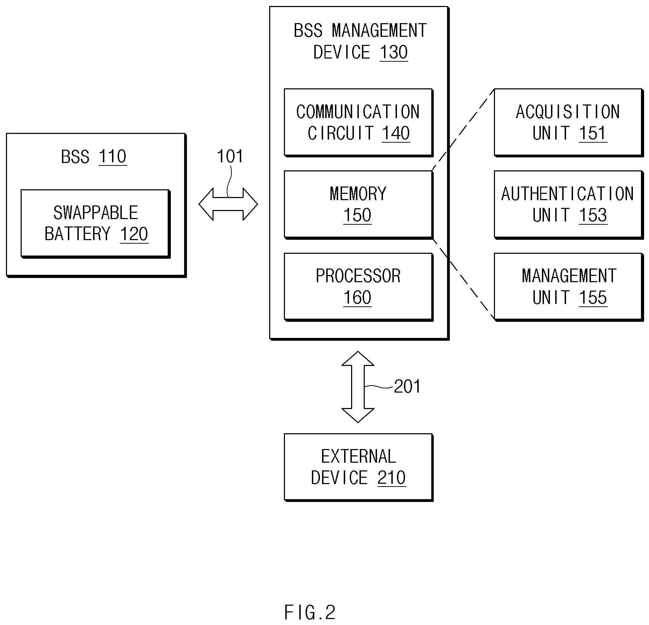

FIG. 2 is a block diagram of a battery swapping station (BSS) management device according to one embodiment. The BSS 110, the swappable battery 120, the BSS management device 130, and the connection 101 illustrated in FIGS. 1 and 2 may have the same configuration, and overlapping descriptions of the same configuration may be omitted. However, the swappable battery 120 of FIG. 2 may be in a state of being inserted into the slot (e.g., the slot 113 of FIG. 1) of the BSS 110.

Referring to FIG. 2, the BSS management device 130 may be connected to the BSS 110, the swappable battery 120, and/or an external device 210 by wire and/or wirelessly.

According to one embodiment, a connection 201 between the BSS management device 130 and the external device 210 may be a communication connection via a wired and/or wireless network. For example, the external device 210 may be a firmware management system, a user terminal, or an external server. Here, the user terminal may be a mobile device (e.g., a mobile phone, a laptop computer, a smart phone, or a smart pad) or personal computer (PC). According to one embodiment, the wired network may be based on LAN communication or powerline communication. According to one embodiment, the wireless network may be based on a short-range communication network (e.g., Bluetooth, WiFi, or IrDA) or a telecommunication network (a cellular network, a 4G network, or a 5G network).

In another embodiment, the connection 201 between the BSS management device 130 and the external device 210 may be a connection through an inter-device communication method between devices (e.g., a bus, a general purpose input and output (GPIO), a serial peripheral interface (SPI), or a mobile industry processor interface (MIPI)).

According to one embodiment, the BSS management device 130 may include a communication circuit 140, a memory 150, and a processor 160. According to the embodiment, the BSS management device 130 illustrated in FIG. 2 may further include at least one component (e.g., a display, an input device, or an output device) other than the components illustrated in FIG. 2.

According to one embodiment, the communication circuit 140 may establish a wired communication channel and/or a wireless communication channel between the BSS management device 130 and the BSS 110 and/or the external device 210 and transmit and receive data with the BSS 110 and/or the external device 210 through the established communication channel.

According to one embodiment, the memory 150 may include a volatile memory and/or a non-volatile memory.

According to one embodiment, the memory 150 may store data used by at least one component (e.g., the processor 114) of the BSS management device 130. For example, the data may include software (or instruction related thereto), input data, or output data. According to one embodiment, the instruction may allow the BSS management device 130 to perform operations defined by the instruction when executed by the processor 160.

According to one embodiment, the memory 150 may include one or more software (e.g., an acquisition unit 151, an authentication unit 153, and a management unit 155).

According to one embodiment, the processor 160 may include a central processing unit, an application processor, a graphics processing unit, a neural processing unit (NPU), an image signal processor, a sensor hub processor, or a communication processor.

According to one embodiment, the processor 160 may control at least one another component (e.g., a hardware or software component) of the BSS management device 130 connected to the processor 160 by executing the software (e.g., the acquisition unit 151, the authentication unit 153, and the management unit 155) and perform various data processing or calculations.

Hereinafter, a method in which the BSS management device 130 manages the BSS 110 and the swappable battery 120 through the acquisition unit 151, the authentication unit 153, and/or the management unit 155 will be described.

According to one embodiment, the acquisition unit 151 may acquire firmware update data. According to one embodiment, the acquisition unit 151 may acquire the firmware update data from the external device 210 connected via the wired and/or wireless network. According to one embodiment, the firmware update data may include first update data for updating the firmware of the BSS 110 to the first version and second update data for updating the firmware of the swappable battery 120 to the second version. Here, the second version may be a version compatible with the functions updated from the first version.

According to one embodiment, the acquisition unit 151 may acquire state data of the BSS 110. According to one embodiment, the acquisition unit 151 may acquire the state data of the BSS 110 from BSS 110 connected via the wired and/or wireless network. Here, the state data of the BSS 110 may include various data related to the BSS 110. For example, the state data of the BSS 110 may include data related to a communication environment of the BSS 110, data related to whether the swappable battery 120 is inserted, and/or data related to the power, charging voltage, or charging current of the BSS 110.

According to one embodiment, the acquisition unit 151 may acquire state data of the swappable battery 120. According to one embodiment, the acquisition unit 151 may acquire the state data of the swappable battery 120 from the BSS 110 and/or the swappable battery 120 connected via the wired and/or wireless network. Here, the state data of the swappable battery 120 may include various data related to the swappable battery 120. For example, the state data of the swappable battery 120 may include state of charge (SOC) data and/or state of health (SOH) data of the swappable battery 120.

According to one embodiment, the authentication unit 153 may perform the authentication for the BSS 110 and/or the swappable battery 120.

According to one embodiment, the authentication unit 153 may perform first authentication for the BSS 110. According to one embodiment, the authentication unit 153 may send the first authentication request signal for the BSS 110 to the BSS 110. The BSS 110 may send the first authentication signal to the BSS management device 130 in response to the first authentication request signal. When receiving the first authentication signal, the authentication unit 153 may determine that the authentication for the BSS 110 is successful.

According to one embodiment, the authentication unit 153 may perform second authentication for the swappable battery 120. For example, the authentication unit 153 may send the second authentication request signal for the swappable battery 120 to the BSS 110. The BSS 110 may transmit the second authentication request signal to the swappable battery 120 by wire or wirelessly. The swappable battery 120 may transmit the second authentication signal to the BSS 110 by wire or wirelessly in response to the second authentication request signal, and the BSS 110 may send the second authentication signal to the BSS management device 130. As another example, the authentication unit 153 may send the second authentication request signal for the swappable battery 120 to the swappable battery 120. The swappable battery 120 may send the second authentication signal to the BSS management device 130 in response to the second authentication request signal. When receiving the second authentication signal, the authentication unit 153 may determine that the authentication for the swappable battery 120 is successful.

According to one embodiment, when the first authentication for the BSS 110 is successful, the authentication unit 153 may perform the second authentication for the swappable battery 120.

According to one embodiment, the management unit 155 may remotely manage the BSS 110 and/or the swappable battery 120. According to one embodiment, the management unit 155 may manage the BSS 110 and/or the swappable battery 120 by wire or wirelessly depending on communication environments. Here, the communication environments may be communication environments of the BSS 110, the swappable battery 120, and/or the BSS management device 130. For example, the management unit 155 may manage the BSS 110 wirelessly when the BSS 110 is currently in a communication environment not suitable for wired communication (e.g., when the BSS 110 is in a place where it is not easy to establish the wired network).

According to one embodiment, the management unit 155 may update the firmware of the BSS 110 and/or the firmware of the swappable battery 120 based on the firmware update data acquired by the acquisition unit 151. According to one embodiment, the management unit 155 may update the firmware of the BSS 110 to the first version. According to one embodiment, the management unit 155 may update the firmware of the swappable battery 120 to the second version. Here, the second version may be a version compatible with the functions updated from the first version.

According to one embodiment, the management unit 155 may send the firmware update signal of the BSS 110 and/or the firmware update signal of the swappable battery 120 to the BSS 110. For example, the management unit 155 may acquire the first update signal for allowing the firmware of the BSS 110 to be updated to the first version and/or the second update signal for allowing the firmware of the swappable battery 120 to be updated to the second version.

According to one embodiment, the management unit 155 may directly send the firmware update signal of the swappable battery 120 to the swappable battery 120. For example, the management unit 155 may directly send the second update signal for allowing the firmware of the swappable battery 120 to be updated to the second version to the swappable battery 120.

According to one embodiment, the management unit 155 may control at least one of power, a charging voltage, or charging current of the B S S 110 based on the state data of the BSS 110 and/or the state data of the swappable battery 120 acquired by the acquisition unit 151. According to one embodiment, the management unit 155 may control at least one of the charging voltage or charging current of the BSS 110 according to the SOH of the swappable battery 120 based on the state data of the swappable battery 120. For example, the management unit 155 may control the charging voltage to a first voltage when the SOH of the swappable battery 120 is a first level or more and smaller than a second level and control the charging voltage to a second voltage when the SOH of the swappable battery 120 is the second level or more and smaller than a third level.

According to one embodiment, the management unit 155 may remotely manage the BSS 110 and/or the swappable battery 120 based on the authentication performed by the authentication unit 153.

According to one embodiment, when both the first authentication for the BSS 110 and the second authentication for the swappable battery 120 are successful, the management unit 155 may update the firmware of the BSS 110 and the firmware of the swappable battery 120.

According to one embodiment, when the authentication for each of the BSS 110 and the swappable battery 120 is successful, the management unit 155 may perform the firmware update for each. For example, when the first authentication for the BSS 110 is successful, the management unit 155 may update the firmware of the BSS 110. Additionally, when the second authentication for the swappable battery 120 is successful, the management unit 155 may update the firmware of the swappable battery 120.

According to one embodiment, when the first authentication for the BSS 110 is successful, the management unit 155 may control at least one of the power, charging voltage, or charging current of the BSS 110.

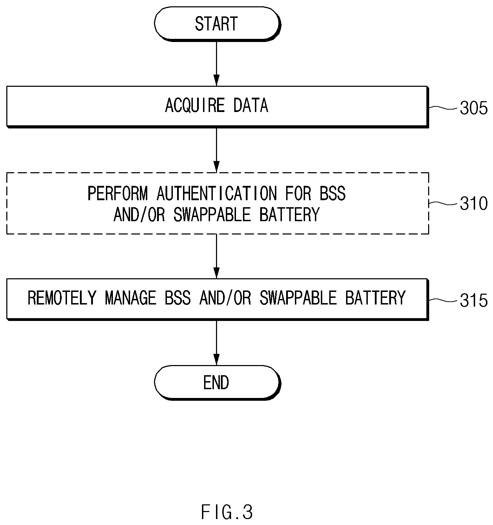

FIG. 3 is an operation flowchart of the BSS management device according to one embodiment. FIG. 3 may be described by using the components of FIGS. 1 and 2.

The embodiment illustrated in FIG. 3 is only one embodiment, the order of operations according to various embodiments of the present invention may differ from that illustrated in FIG. 3, and some operations illustrated in FIG. 3 may be omitted, the order between the operations may be changed, or the operations may be merged. For example, operation 310 in FIG. 3 may be omitted.

Referring to FIG. 3, in operation 305, the BSS management device 130 may acquire data.

According to one embodiment, the BSS management device 130 may acquire firmware update data. According to one embodiment, the BSS management device 130 may acquire the firmware update data from the external device 210 connected via the wired and/or wireless network. According to one embodiment, the firmware update data may include the first update data for updating the firmware of the BSS 110 to the first version and the second update data for updating the firmware of the swappable battery 120 to the second version. Here, the second version may be a version compatible with the functions updated from the first version.

According to one embodiment, the BSS management device 130 may acquire the state data of the BSS 110. According to one embodiment, the BSS management device 130 may acquire the state data of the BSS 110 from the BSS 110 connected via the wired and/or wireless network. Here, the state data of the BSS 110 may include various data related to the BSS 110. For example, the state data of the BSS 110 may include the data related to the communication environment of the BSS 110, the data related to whether the swappable battery 120 is inserted, and/or the data related to the power, charging voltage, or charging current of the BSS 110.

According to one embodiment, the BSS management device 130 may acquire the state data of the swappable battery 120. According to one embodiment, the BSS management device 130 may acquire the state data of the swappable battery 120 from the BSS 110 and/or the swappable battery 120 connected via the wired and/or wireless network. Here, the state data of the swappable battery 120 may include various data related to the swappable battery 120. For example, the state data of the swappable battery 120 may include the SOC data and/or the SOH data of the swappable battery 120.

In operation 310, the BSS management device 130 may perform the authentication for the BSS 110 and/or the swappable battery 120.

According to one embodiment, the BSS management device 130 may perform the first authentication for the BSS 110. According to one embodiment, the BSS management device 130 may send the first authentication request signal for the BSS 110 to the BSS 110. The BSS 110 may send the first authentication signal to the BSS management device 130 in response to the first authentication request signal. When receiving the first authentication signal, the BSS management device 130 may determine that the authentication for the BSS 110 is successful.

According to one embodiment, the BSS management device 130 may perform the second authentication for the swappable battery 120. For example, the BSS management device 130 may send the second authentication request signal for the swappable battery 120 to the BSS 110. The BSS 110 may transmit the second authentication request signal to the swappable battery 120 by wire or wirelessly. The swappable battery 120 may transmit the second authentication signal to the BSS 110 by wire or wirelessly in response to the second authentication request signal, and the BSS 110 may send the second authentication signal to the BSS management device 130. As another example, the BSS management device 130 may send the second authentication request signal for the swappable battery 120 to the swappable battery 120. The swappable battery 120 may send the second authentication signal to the BSS management device 130 in response to the second authentication request signal. When receiving the second authentication signal, the BSS management device 130 may determine that the authentication for the swappable battery 120 is successful.

According to one embodiment, when the first authentication for the BSS 110 is successful, the BSS management device 130 may perform the second authentication for the swappable battery 120.

In operation 315, the BSS management device 130 may remotely manage the BSS 110 and/or the swappable battery 120. According to one embodiment, the BSS management device 130 may manage the BSS 110 and/or the swappable battery 120 by wire or wirelessly depending on communication environments. Here, the communication environments may be communication environments of the BSS 110, the swappable battery 120, and/or the BSS management device 130. For example, the BSS management device 130 may manage the BSS 110 wirelessly when the BSS 110 is currently in the communication environment not suitable for wired communication (e.g., when the BSS 110 is in a place where it is not easy to establish the wired network).

According to one embodiment, the BSS management device 130 may update the firmware of the BSS 110 and/or the firmware of the swappable battery 120 based on the firmware update data acquired in operation 305. According to one embodiment, the BSS management device 130 may update the firmware of the BSS 110 to the first version. According to one embodiment, the BSS management device 130 may update the firmware of the swappable battery 120 to the second version. Here, the second version may be a version compatible with the functions updated from the first version.

According to one embodiment, the BSS management device 130 may send the firmware update signal of the BSS 110 and/or the firmware update signal of the swappable battery 120 to the BSS 110. For example, the BSS management device 130 may send the first update signal for allowing the firmware of the BSS 110 to be updated to the first version and/or the second update signal for allowing the firmware of the swappable battery 120 to be updated to the second version to the BSS 110.

According to one embodiment, the BSS management device 130 may directly send the firmware update signal of the swappable battery 120 to the swappable battery 120. For example, the BSS management device 130 may directly send the second update signal for allowing the firmware of the swappable battery 120 to be updated to the second version to the swappable battery 120.

According to one embodiment, the BSS management device 130 may control at least one of the power, charging voltage, or charging current of the BSS 110 based on the state data of the BSS 110 and/or the state data of the swappable battery 120 acquired in operation 305. According to one embodiment, the BSS management device 130 may control at least one of the charging voltage or charging current of the BSS 110 according to the SOH of the swappable battery 120 based on the state data of the swappable battery 120. For example, the BSS management device 130 may control the charging voltage to the first voltage when the SOH of the swappable battery 120 is the first level or more and smaller than the second level and control the charging voltage to the second voltage when the SOH of the swappable battery 120 is the second level or more and smaller than the third level.

According to one embodiment, the BSS management device 130 may remotely manage the BSS 110 and/or the swappable battery 120 based on the authentication performed in operation 310.

According to one embodiment, when both the first authentication for the BSS 110 and the second authentication for the swappable battery 120 are successful, the BSS management device 130 may update the firmware of the BSS 110 and the firmware of the swappable battery 120.

According to one embodiment, when the authentication for each of the BSS 110 and the swappable battery 120 is successful, the BSS management device 130 may perform the firmware update for each. For example, when the first authentication for the BSS 110 is successful, the BSS management device 130 may update the firmware of the BSS 110. In addition, when the second authentication for the swappable battery 120 is successful, the BSS management device 130 may update the firmware of the swappable battery 120.

According to one embodiment, when the first authentication for the BSS 110 is successful, the BSS management device 130 may control at least one of the power, charging voltage, or charging current of the BSS 110.

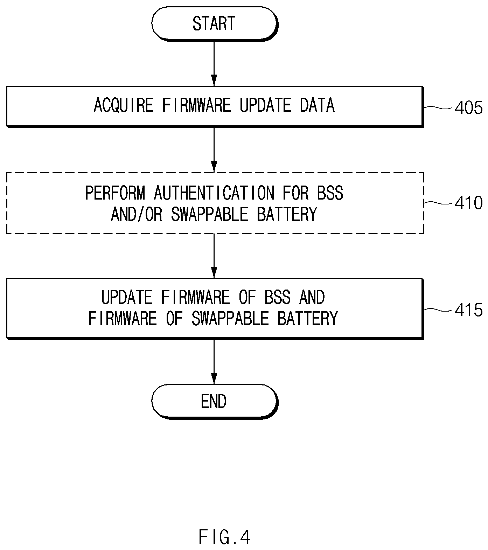

Hereinafter, an operation of the BSS management device 130 updating the firmware of the BSS 110 and/or the firmware of the swappable battery 120 may be described with reference to FIG. 4.

FIG. 4 is an operation flowchart of the BSS management device according to one embodiment. FIG. 4 may be described by using the components of FIGS. 1 and 2.

The embodiment illustrated in FIG. 4 is only one embodiment, the order of operations according to various embodiments of the present invention may differ from that illustrated in FIG. 4, and some operations illustrated in FIG. 4 may be omitted, the order between the operations may be changed, or the operations may be merged. For example, operation 410 in FIG. 4 may be omitted.

Referring to FIG. 4, in operation 405, the BSS management device 130 may acquire the firmware update data. According to one embodiment, the BSS management device 130 may acquire the firmware update data from the external device 210 connected via the wired and/or wireless network. According to one embodiment, the firmware update data may include the first update data for updating the firmware of the BSS 110 to the first version and the second update data for updating the firmware of the swappable battery 120 to the second version. Here, the second version may be a version compatible with the functions updated from the first version.

In operation 410, the BSS management device 130 may perform the authentication for the BSS 110 and the swappable battery 120.

According to one embodiment, the BSS management device 130 may perform the first authentication for the BSS 110. According to one embodiment, the BSS management device 130 may send the first authentication request signal for the BSS 110 to the BSS 110. The BSS 110 may send the first authentication signal to the BSS management device 130 in response to the first authentication request signal. When receiving the first authentication signal, the BSS management device 130 may determine that the authentication for the BSS 110 is successful.

According to one embodiment, the BSS management device 130 may perform the second authentication for the swappable battery 120. For example, the BSS management device 130 may send the second authentication request signal for the swappable battery 120 to the BSS 110. The BSS 110 may transmit the second authentication request signal to the swappable battery 120 by wire or wirelessly. The swappable battery 120 may transmit the second authentication signal to the BSS 110 by wire or wirelessly in response to the second authentication request signal, and the BSS 110 may send the second authentication signal to the BSS management device 130. As another example, the BSS management device 130 may send the second authentication request signal for the swappable battery 120 to the swappable battery 120. The swappable battery 120 may send the second authentication signal to the BSS management device 130 in response to the second authentication request signal. When receiving the second authentication signal, the BSS management device 130 may determine that the authentication for the swappable battery 120 is successful.

According to one embodiment, when the first authentication for the BSS 110 is successful, the BSS management device 130 may perform the second authentication for the swappable battery 120.

In operation 415, the BSS management device 130 may update the firmware of the BSS 110 and/or the firmware of the swappable battery 120.

According to one embodiment, the BSS management device 130 may update the firmware of the BSS 110 and/or the firmware of the swappable battery 120 based on the firmware update data acquired in operation 405. According to one embodiment, the BSS management device 130 may update the firmware of the BSS 110 to the first version. According to one embodiment, the BSS management device 130 may update the firmware of the swappable battery 120 to the second version. Here, the second version may be a version compatible with the functions updated from the first version.

According to one embodiment, the BSS management device 130 may send the firmware update signal of the BSS 110 and/or the firmware update signal of the swappable battery 120 to the BSS 110. For example, the BSS management device 130 may send the first update signal for allowing the firmware of the BSS 110 to be updated to the first version and/or the second update signal for allowing the firmware of the swappable battery 120 to be updated to the second version to the BSS 110.

According to one embodiment, the BSS management device 130 may directly send the firmware update signal of the swappable battery 120 to the swappable battery 120. For example, the BSS management device 130 may directly send the second update signal for allowing the firmware of the swappable battery 120 to be updated to the second version to the swappable battery 120.

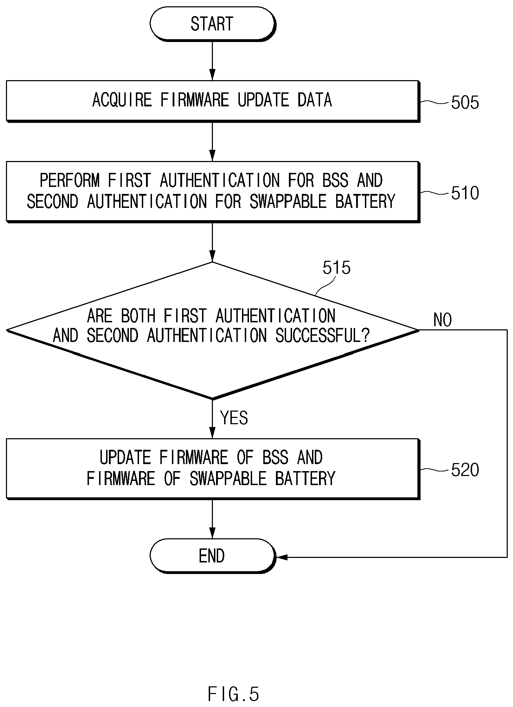

Hereinafter, an operation of the BSS management device 130 updating the firmware of the BSS 110 and the firmware of the swappable battery 120 when both the first authentication for the BSS 110 and the second authentication for the swappable battery 120 are successful may be described with reference to FIG. 5.

FIG. 5 is an operation flowchart of the BSS management device according to one embodiment. FIG. 5 may be described by using the components of FIGS. 1 and 2.

The embodiment illustrated in FIG. 5 is only one embodiment, the order of operations according to various embodiments of the present invention may differ from that illustrated in FIG. 5, and some operations illustrated in FIG. 5 may be omitted, the order between the operations may be changed, or the operations may be merged.

Referring to FIG. 5, in operation 505, the BSS management device 130 may acquire the firmware update data. According to one embodiment, the BSS management device 130 may acquire the firmware update data from the external device 210 connected via the wired and/or wireless network. According to one embodiment, the firmware update data may include the first update data for updating the firmware of the BSS 110 to the first version and the second update data for updating the firmware of the swappable battery 120 to the second version. Here, the second version may be a version compatible with the functions updated from the first version.

In operation 510, the BSS management device 130 may perform the first authentication for the BSS 110 and the second authentication for the swappable battery 120.

According to one embodiment, the BSS management device 130 may perform the first authentication for the BSS 110. According to one embodiment, the BSS management device 130 may send the first authentication request signal for the BSS 110 to the BSS 110.

According to one embodiment, the BSS management device 130 may perform the second authentication for the swappable battery 120. For example, the BSS management device 130 may send the second authentication request signal for the swappable battery 120 to the BSS 110. The BSS 110 may transmit the second authentication request signal to the swappable battery 120 by wire or wirelessly. As another example, the BSS management device 130 may send the second authentication request signal for the swappable battery 120 to the swappable battery 120.

In operation 515, the BSS management device 130 may determine whether both the first authentication and the second authentication have been successful.

According to one embodiment, the BSS 110 may send the first authentication signal to the BSS management device 130 in response to the first authentication request signal. When receiving the first authentication signal, the BSS management device 130 may determine that the authentication for the BSS 110 is successful.

According to one embodiment, the swappable battery 120 may transmit the second authentication signal to the BSS 110 by wire or wirelessly in response to the second authentication request signal, and the BSS 110 may send the second authentication signal to the BSS management device 130. According to another embodiment, the swappable battery 120 may send the second authentication signal to the BSS management device 130 in response to the second authentication request signal. When receiving the second authentication signal, the BSS management device 130 may determine that the authentication for the swappable battery 120 is successful.

In operation 515, when it is determined that both the first authentication and the second authentication are successful ("YES"), in operation 520, the BSS management device 130 may update the firmware of the BSS 110 and the firmware of the swappable battery 120.

According to one embodiment, the BSS management device 130 may update the firmware of the BSS 110 and/or the firmware of the swappable battery 120 based on the firmware update data acquired in operation 505. According to one embodiment, the BSS management device 130 may update the firmware of the BSS 110 to the first version. According to one embodiment, the BSS management device 130 may update the firmware of the swappable battery 120 to the second version. Here, the second version may be a version compatible with the functions updated from the first version.

According to one embodiment, the BSS management device 130 may send the firmware update signal of the BSS 110 and/or the firmware update signal of the swappable battery 120 to the BSS 110. For example, the BSS management device 130 may send the first update signal for allowing the firmware of the BSS 110 to be updated to the first version and/or the second update signal for allowing the firmware of the swappable battery 120 to be updated to the second version to the BSS 110.

According to one embodiment, the BSS management device 130 may directly send the firmware update signal of the swappable battery 120 to the swappable battery 120. For example, the BSS management device 130 may directly send the second update signal for allowing the firmware of the swappable battery 120 to be updated to the second version to the swappable battery 120.

In operation 515, when it is determined that at least one of the first authentication or the second authentication is failed ("NO"), the BSS management device 130 may end the operation of FIG. 5.

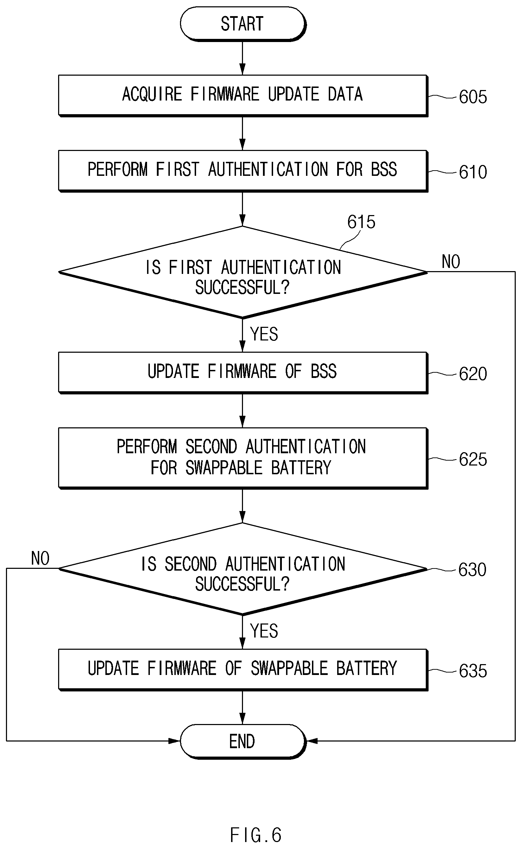

Hereinafter, an operation of the BSS management device 130 performing the firmware update for each when the authentication for each of the BSS 110 and the swappable battery 120 is successful may be described with reference to FIG. 6.

FIG. 6 is an operation flowchart of the BSS management device according to one embodiment. FIG. 6 may be described by using the components of FIGS. 1 and 2.

The embodiment illustrated in FIG. 6 is only one embodiment, the order of operations according to various embodiments of the present invention may differ from that illustrated in FIG. 6, and some operations illustrated in FIG. 6 may be omitted, the order between the operations may be changed, or the operations may be merged. For example, in FIG. 4, the order of operation 620 and operation 625 may be changed.

Referring to FIG. 6, in operation 605, the BSS management device 130 may acquire the firmware update data. According to one embodiment, the BSS management device 130 may acquire the firmware update data from the external device 210 connected via the wired and/or wireless network. According to one embodiment, the firmware update data may include the first update data for updating the firmware of the BSS 110 to the first version and the second update data for updating the firmware of the swappable battery 120 to the second version. Here, the second version may be a version compatible with the functions updated from the first version.

In operation 610, the BSS management device 130 may perform the first authentication for the BSS 110. According to one embodiment, the BSS management device 130 may send the first authentication request signal for the BSS 110 to the BSS 110.

In operation 615, the BSS management device 130 may determine whether the first authentication has been successful.

According to one embodiment, the BSS 110 may send the first authentication signal to the BSS management device 130 in response to the first authentication request signal. When receiving the first authentication signal, the BSS management device 130 may determine that the authentication for the BSS 110 is successful.

In operation 615, when it is determined that the first authentication is failed ("NO"), the BSS management device 130 may end the operation of FIG. 6.

In operation 615, when it is determined that the first authentication is successful ("YES"), in operation 620, the BSS management device 130 may update the firmware of the BSS 110.

According to one embodiment, the BSS management device 130 may update the firmware of the BSS 110 based on the firmware update data acquired in operation 605. According to one embodiment, the BSS management device 130 may update the firmware of the BSS 110 to the first version.

According to one embodiment, the BSS management device 130 may send the firmware update signal of the BSS 110 to the BSS 110. For example, the BSS management device 130 may send the first update signal for allowing the firmware of the BSS 110 to be updated to the first version to the BSS 110.

In operation 625, the BSS management device 130 may perform the second authentication for the swappable battery 120.

According to one embodiment, the BSS management device 130 may perform the second authentication for the swappable battery 120. For example, the BSS management device 130 may send the second authentication request signal for the swappable battery 120 to the BSS 110. The BSS 110 may transmit the second authentication request signal to the swappable battery 120 by wire or wirelessly. As another example, the BSS management device 130 may send the second authentication request signal for the swappable battery 120 to the swappable battery 120.

In operation 630, the BSS management device 130 may determine whether the second authentication has been successful.

According to one embodiment, the swappable battery 120 may transmit the second authentication signal to the BSS 110 by wire or wirelessly in response to the second authentication request signal, and the BSS 110 may send the second authentication signal to the BSS management device 130. According to another embodiment, the swappable battery 120 may send the second authentication signal to the BSS management device 130 in response to the second authentication request signal. When receiving the second authentication signal, the BSS management device 130 may determine that the authentication for the swappable battery 120 is successful.

In operation 630, when it is determined that the second authentication is successful ("YES"), in operation 635, the BSS management device 130 may update the firmware of the swappable battery 120.

According to one embodiment, the BSS management device 130 may update the firmware of the swappable battery 120 based on the firmware update data acquired in operation 605. According to one embodiment, the BSS management device 130 may update the firmware of the swappable battery 120 to the second version.

According to one embodiment, the BSS management device 130 may send the firmware update signal of the swappable battery 120 to the BSS 110. For example, the BSS management device 130 may send the second update signal for allowing the firmware of the swappable battery 120 to be updated to the second version to the BSS 110.

According to one embodiment, the BSS management device 130 may directly send the firmware update signal of the swappable battery 120 to the swappable battery 120. For example, the BSS management device 130 may directly send the second update signal for allowing the firmware of the swappable battery 120 to be updated to the second version to the swappable battery 120.

In operation 630, when it is determined that the second authentication is failed ("NO"), the BSS management device 130 may end the operation of FIG. 6.

The terms such as "comprise," "constitute," or "have" described above mean that the corresponding component may be inherent unless otherwise stated, and thus should be construed as further including another component rather than excluding another component. All terms including technical or scientific terms have the same meaning as commonly understood by those skilled in the art to which the embodiments disclosed herein pertain unless defined otherwise. Commonly used terms, such as terms defined in a dictionary, should be construed as consistent with the contextual meaning of the related art and are not construed in an ideal or excessively formal meaning unless explicitly defined herein.

## Claims

1. A battery swapping station (BSS) management device comprising:
an acquisition unit configured to acquire firmware update data; and
a management unit configured to remotely manage a BSS and a swappable battery inserted into a slot of the BSS,
wherein the management unit updates firmware of the BSS and firmware of the swappable battery based on the firmware update data.

2. The BSS management device of claim 1, wherein the management unit manages the BSS and the swappable battery by wire or wirelessly depending on a communication environment.

3. The BSS management device of claim 1, wherein the management unit is configured to:
update the firmware of the BSS to a first version; and
update the firmware of the swappable battery to a second version compatible with functions updated from the first version, and
the firmware update data includes first update data that updates the firmware of the BSS to the first version, and second update data that updates the firmware of the swappable battery to the second version.

4. The BSS management device of claim 1, wherein the acquisition unit acquires state data of the BSS, and
the management unit controls at least one of power, a charging voltage, or a charging current of the BSS based on the state data.

5. The BSS management device of claim 1, wherein the acquisition unit acquires state data of the swappable battery, and
the management unit controls at least one of a charging voltage, or a charging current of the BSS based on the state data.

6. The BSS management device of claim 1, further comprising an authentication unit configured to perform authentication for the BSS and/or the swappable battery,
wherein the management unit remotely manages the BSS and the swappable battery based on the authentication.

7. The BSS management device of claim 6, wherein the authentication unit performs first authentication for the BSS and second authentication for the swappable battery, and
the management unit updates the firmware of the BSS and the firmware of the swappable battery when both the first authentication and the second authentication are successful.

8. The BSS management device of claim 6, wherein the authentication unit is configured to:
perform a first authentication for the BSS; and
perform a second authentication for the swappable battery when the first authentication is successful, and
the management unit is configured to:
update the firmware of the BSS when the first authentication is successful; and
update the firmware of the swappable battery when the second authentication is successful.

9. A battery swapping station (BSS) management method comprising:
an operation of acquiring firmware update data; and
an operation of remotely managing a battery swapping station (BSS) and a swappable battery inserted into a slot of the BSS,
wherein the operation of remotely managing the BSS and the swappable battery includes an operation of updating firmware of the BSS and firmware of the swappable battery based on the firmware update data.

10. The BSS management method of claim 9, wherein the operation of updating the firmware of the BSS and the firmware of the swappable battery includes:
an operation of updating the firmware of the BSS to a first version; and
an operation of updating the firmware of the swappable battery to a second version compatible with functions updated from the first version, and
the firmware update data includes first update data that updates the firmware of the BSS to the first version, and second update
data that updates the firmware of the swappable battery to the second version.

11. The BSS management method of claim 9, further comprising an operation of acquiring state data of the BSS,
wherein the operation of remotely managing the BSS includes an operation of controlling at least one of power, a charging voltage, or a charging current of the BSS based on the state data.

12. The BSS management method of claim 9, further comprising an operation of acquiring state data of the swappable battery,
wherein the operation of remotely managing the BSS includes an operation of controlling at least one of a charging voltage, or a charging current of the BSS based on the state data.

13. The BSS management method of claim 9, further comprising an operation of performing authentication for the BSS and/or the swappable battery,
wherein the operation of remotely managing the BSS and the swappable battery includes an operation of remotely managing the BSS and the swappable battery based on the authentication.

14. The BSS management method of claim 13, wherein the operation of performing the authentication includes an operation of performing a first authentication for the BSS and a second authentication for the swappable battery, and
the operation of updating the firmware of the BSS and the firmware of the swappable battery includes an operation of updating the firmware of the BSS and the firmware of the swappable battery when both the first authentication and the second authentication are successful.

15. The BSS management method of claim 13, wherein the operation of performing the authentication includes:
an operation of performing a first authentication for the BSS; and
an operation of performing a second authentication for the swappable battery when the first authentication is successful, and
the operation of updating the firmware of the BSS and the firmware of the swappable battery includes:
an operation of updating the firmware of the BSS when the first authentication is successful; and
an operation of updating the firmware of the swappable battery when the second authentication is successful.
